## Europäisches Patentamt
## European Patent Office
## Office européen des brevets

(11) Veröffentlichungsnummer: **0 277 543**
**A2**

# EUROPÄISCHE PATENTANMELDUNG

(21) Anmeldenummer: 88100733.0

(22) Anmeldetag: 20.01.88

(51) Int. Cl.⁴: **C08F 279/02** , //(C08F279/02, 212:06,220:06),(C08F279/02, 212:06,222:02)

(30) Priorität: 24.01.87 DE 3702037

(43) Veröffentlichungstag der Anmeldung:
**10.08.88 Patentblatt 88/32**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Schwaben, Hans-Dieter, Dr.**
**Lindenstrasse 3**
**D-6721 Freisbach(DE)**
Erfinder: **Echte, Adolf, Dr.**
**Leuschnerstrasse 42**
**D-6700 Ludwigshafen(DE)**
Erfinder: **Klaerner, Peter, Dr.**
**Hauptstrasse 62**
**D-6719 Battenberg(DE)**
Erfinder: **Mittnacht, Hans, Dr.**
**Zinkgraefstrasse 44**
**D-6940 Weinheim(DE)**
Erfinder: **Kindler, Hubert, Dr.**
**Westring 19**
**D-6700 Ludwigshafen(DE)**

(54) Schlagfeste thermoplastische Formmasse und deren Verwendung.

(57) Die Erfindung betrifft eine schlagfeste, spannungsrißbeständige thermoplastische Formmasse, enthaltend, jeweils bezogen auf A + B,

A 80 bis 55 Gew.-% einer Hartmatrix aus einem Copolymeren von

$a_{11}$ mindestens einem vinylaromastischen Monomeren und

$a_{12}$ mindestens einem Comonomeren und

B 45 bis 20 Gew.-% einer gleichmäßig in der Hartmatrix verteilten Weichphase, die einen mittleren Teilchendurchmesser, $d_{50}$ (Volumenmittel), von 3,5 bis 9 μm aufweist und erhältlich ist durch Polymerisation der Mischung der Monomeren $a_{11}$ und $a_{12}$ in Gegenwart eines Elastomeren (Kautschuk) unter anschließender Gewinnung des Wertprodukts,

dadurch gekennzeichnet, daß das Comonomere $a_{12}$ ausgewählt wird aus der Gruppe der α,β-ungesättigen Mono- oder Dicarbonsäuren und daß dieses ferner, bezogen auf A + B, in Mengen von 0,1 bis 1,95 Gew.-% angewendet wird.

Die Formmasse wird zur Herstellung von Formteilen verwendet.

## Schlagfeste thermoplastische Formmasse und deren Verwendung

Die Erfindung betrifft eine schlagfeste, spannungsrißbeständige thermoplastische Formmasse, enthaltend, jeweils bezogen auf A + B,

A 80 bis 55 Gew.-% einer Hartmatrix aus einem Copolymeren

von

$a_{11}$ mindestens einem vinylaromatischen Monomeren

und

$a_{12}$ mindestens einem Comonomeren

und

B 45 bis 20 Gew.-% einer gleichmäßig in der Hartmatrix verteilten Weichphase, die einen mittleren Teilchendurchmesser, $d_{50}$ (Volumenmittel), von 3,5 bis 9 $\mu$m aufweist und erhältlich ist durch Polymerisation der Mischung der Monomeren $a_{11}$ und $a_{12}$ in Gegenwart eines Elastomeren (Kautschuk) unter anschließender Gewinnung des Wertprodukts.

Zum Stand der Technik nennen wir:

(1) DE-AS 25 25 019

(2) EP-PS 00 29 174

(3) DE-OS 31 00 785 und

(4) Deutsche Patentanmeldung P 36 17 361.4

Es ist bekannt, daß zur Herstellung von Kühlschrankinnenbehältern schlagfestes Polystyrol mit guter Beständigkeit gegenüber Spannungsrißkorrosion verwendet wird. Aus (1) sind Formmassen bekannt, deren Hartmatrix ausschließlich aus Polystyrol aufgebaut ist, die sich für diesen Zweck eignen.

Aus (2) und (3) sind ebenfalls spannungsrißbeständige Formmassen bekannt, die in der Hartmatrix bis zu 12 Gew.-% eines Comonomeren, z.B. ein Acryl-oder Methacrylsäurederivat resp. ein ethylenisch ungesättigtes Nitril enthalten. Auch diese Formmassen sind aufgrund ihrer Spannungsrißbeständigkeit für den Kühlmöbelsektor geeignet.

In (4) ist ein Verfahren zur Herstellung einer thermoplastischen 2-phasigen Formmasse in Gegenwart eines ionischen Vernetzers beschreiben, deren Hartmatrix als Comonomeres eine Säure enthält.

Weiterhin ist bekannt, daß Kühlschrankinnenbehälter bei der Montage des Kühlschrankes mit Polyurethanschaum hinterschäumt werden.

Nachteilig an den Formmassen gemäß (1) ist, daß sie nicht an den PU-Schaum haften, weshalb sich dieser schon beim Einwirken geringer Kräfte ablöst. Dadurch wird die Stabilität der gesamten Konstruktion nachteilig beeinflußt.

Die Formmassen gemäß (2) und (3) besitzen zwar eine ausreichende Haftung an Polyurethanschaum, nachteilig ist jedoch, daß sich das Fließverhalten der Polymerschmelze durch derart große Mengen an polaren Comonomeren verschlechtert, wodurch die Verarbeitbarkeit erheblich erschwert und die Anwendung sogar in Frage gestellt wird. Durch Absenken des Molekulargewichts kann diesem Effekt zwar entgegengesteuert werden, jedoch ist dem Fachmann bekannt, daß darunter üblicherweise. die mechanischen Eigenschaften, wie die Schlagzähigkeit, leiden.

Weiterhin nachteilig ist, daß im Falle von (3) sogar das stark toxische und cancerogene Acrylnitril gehandhabt werden muß, was im Störfall zu beträchtlichen Gefährdungen der Gesundheit betroffener Personen führen kann.

Aufgabe der vorliegenden Erfindung war es somit, unter Verwendung von Comonomeren schlagfeste spannungsrißbeständige Formmassen zu finden und herzustellen, die gut fließen und eine hervorragende Haftung an PU-Schäumen besitzen.

Diese Aufgabe wird gelöst durch eine Formmasse gemäß Patentanspruch 1.

Die Erfindung betrifft daher eine schlagfeste und zugleich spannungsrißbeständige an Polyurethanschäumen haftende thermoplastische Formmasse, enthaltend, bezogen auf A + B,

A 80 bis 55 Gew.-% einer Hartmatrix aus einem Copolymeren

von

$a_{11}$ mindestens einem vinylaromatischen Monomeren

und

$a_{12}$ mindestens einem Comonomeren

und

B 45 bis 20 Gew.-% einer gleichmäßig in der Hartmatrix verteilten Weichphase, die einen mittleren Teilchendurchmesser, $d_{50}$ (Volumenmittel), von 3,5 bis 9 $\mu$m aufweist und erhältlich ist durch Polymerisation der Mischung der Monomeren $a_{11}$ und $a_{12}$ in Gegenwart eines Elastomeren (Kautschuk) unter anschließender Gewinnung des Wertprodukts.

Sie ist dadurch gekennzeichnet, daß das Comonomere $a_{12}$ ausgewählt wird aus der Gruppe der $\alpha,\beta$-ungesättigten Mono-oder Dicarbonsäuren und daß dieses ferner, bezogen auf A + B, in Mengen von 0,1 bis 1,95 Gew.-% angewendet wird.

Nachfolgend werden der Aufbau der erfindunsgemäßen Formmasse sowie dern Herstellung beschrieben.

Die erfindungsgemäße Formmasse ist 2-phasig aufgebaut und enthält (vorzugsweise besteht sie aus) eine Hartmatrix A und eine Weichphase B. Während oder nach der Herstellung der Formmasse werden übliche Zusatzstoffe (Komponente C) zugesetzt.

Die Formmasse enthält folgende Anteile, bezogen auf A + B:
A: 80 bis 55 Gew.-%, vorzugsweise 75 bis 55 Gew.-%,
B: 20 bis 45 Gew.-%, vorzugsweise 25 bis 45 Gew.-%.

Bezogen auf 100 Gew.-Teile A + B können zugegen sein:
C: 0,5 bis 25 Gew.-Teile, vorzugsweise 1 bis 20 Gew.-Teile.

Komponente A

Die Komponente A der erfindungsgemäßen Formmasse ist aus einem Copolymerisat von
$a_{11}$ mindestens einem vinylaromatischen Monomeren und
$a_{12}$ mindestens einem Comonomeren aufgebaut
bzw. sie besteht daraus.

Bezogen auf A, sind 97,82 bis 99,90 Gew.-% des vinylaromatischen Monomeren $a_{11}$ und 0,10 bis 2,18 Gew.-% des Comonomeren $a_{12}$ im Copolymerisat (Hartmatrix) einpolymerisiert.

Die Viskositätszahl der Hartmatrix soll 60 bis 90 ml/g (0,5 %ige Lösung in Toluol bei 23°C) und insbesondere 65 bis 80 ml/g betragen.

Als monovinylaromatische Monomere $a_{11}$ kommen dabei insbesondere das Styrol, ferner die kern-oder seitenkettenalkylierten Styrole, wie $\alpha$-Methylstyrol und p-Methylstyrol in Betracht. Vorzugsweise wird jedoch ausschließlich Styrol verwendet.

Als von den Monomeren $a_{12}$ verschiedene Comonomere $a_{12}$ werden $\alpha,\beta$-ungesättigte Mono-oder Dicarbonsäuren verwendet. Als Carbonsäuren kommen in Frage: Acrylsäure, Methacrylsäure, (E)-und (Z)-Crotonsäure, 3-Methyl-2-butensäure, Vinylessigsäure, Ethylacrylsäure, Itaconsäure, Fumarsäure, Maleinsäure etc. Vorzugsweise werden Acrylsäure, Fumarsäure, Itaconsäure und Methacrylsäure oder Mischungen dieser Säuren verwendet. Besonders bevorzugt ist Acrylsäure und Methacrylsäure. Die Herstellung derartiger Copolymerisate (auch in Gegenwart von Kautschuk) ist dem Fachmann bekannt.

Komponente B

Die erfindungsgemäße Formmasse weist als Komponente B eine Weichphase auf, die fein dispergiert in der Hartmatrix vorliegt. Die Weichphase kann durch Elmiaufnahmen am Endprodukt, der Formmasse, nachgewiesen werden. Der Anteil der Weichphase wird durch Bestimmung des Gelgehalts ermittelt. Bei der Weichphase handelt es sich um ein Pfropfmischpolymerisat der Monomeren $a_{11}$ und $a_{12}$ der Hartmatrix (also eines Copolymerisates) auf ein Elastomeres (Kautschuk) als Pfropfgrundlage. Die Herstellung und Dispergierung ist dem Fachmann bekannt.

Als Elastomere oder Kautschuke werden die üblicherweise für die Schlagfestmodifizierung von Styrolpolymerisaten gebräuchlichen natürlichen und synthetischen Kautschuke eingesetzt. Im Sinne der Erfindung geeignet sind Polybutadiene, Polyisoprene und Mischpolymerisate des Butadiens und/oder des Isoprens mit Styrol, die eine Glastemperatur unterhalb von -20°C besitzen. Die Mischpolymerisate des Butadiens oder des Isoprens mit Styrol können die Monomeren sowohl in statistischer Verteilung als auch blockförmig eingebaut enthalten. Besonders bevorzugt sind Polybutadiene mit 30 bis 99 % cis-1,4-Einheiten.

Bei der Herstellung der Weichphase wird das Elastomere in Mengen von 4 bis 12 Gew.-%, vorzugsweise von 6 bis 12 Gew.-%, bezogen auf die Mischung der Monomeren $a_{11} + a_{12}$ (den Reaktionsansatz), angewendet.

Das mittlere Molekulargewicht der Elastomeren liegt im Bereich von 50.000 bis 400.000, insbesondere von 200 000 bis 300 000 (Gew.-Mittel). Die Teilchen der Weichphase bestehen aus Zellenteilchen, die einen mittleren Teilchendurchmesser, $d_{50}$-Wert (Volumenmittel aus Bildanalyse) von 3,5 bis 9 $\mu$m, vorzugsweise von 4 bis 6 $\mu$m bei einer Verteilungsbreite (d90-d$_{10}$)-Wert von 4 bis 10 $\mu$m aufweisen. Das in der Weichphase occludierte und gepfropfte Copolymerisat aus $a_{11}$ und $a_{12}$ wird dieser zugerechnet.

Komponente C

Zusätzlich zu den Komponenten A und B kann die erfindungsgemäße Formmasse eine Komponente C, in der Regel Zusatzstoffe, enthalten. Die Komponente C kann schon zur Herstellung der Formmasse dem Reaktionsansatz zugegeben werden, oder aber für die Verarbeitung in die Formmasse eingemischt werden.

Unter der Komponente C sollen z.B. die für die Herstellung der Formmasse der vorliegenden Erfindung bekannten Hilfsmittel, wie Mineralöle, übliche Ester von aromatischen oder aliphatischen Carbonsäuren mit aliphatischen Alkoholen, Polyalkylenoxide auf Basis von Ethylenoxid und/oder Propylenoxid, Molekulargewichtsregler, Schutzkolloide, Antioxidantien usw. verstanden werden. Als Hilfsmittel seien ferner genannt Gleitmittel, wie Zinkstearat und andere Stearate bzw. andere übliche Hilfsmittel. Für die Herstellung von Formteilen aus der Formmasse können noch zugesetzt werden Farbstoffe, Stabilisatoren, evtl. Flammschutzmittel in den dem Fachmann geläufigen Mengen.

Die erfindungsgemäße Formmasse soll folgende Eigenschaften aufweisen, die teils durch die Hartmatrix, teils durch die Weichphase oder durch die Herstellung bedingt sind.

1. Der Quellungsindex der Weichphase soll im Bereich von 9 bis 13 liegen.
2. Der Gelgehalt soll im Bereich von 25 bis 35 liegen.
3. Die VZ der Hartmatrix soll 60 bis 90 ml/g betragen.
4. Der mittlere Teilchendurchmesser, $d_{50}$-Wert (Volumenmittel durch Bildanalyse) liegt im Bereich von 3,5 bis 9 $\mu$m, vorzugsweise von 4 bis 6 $\mu$m, bei einem $d_{90}$-$d_{10}$-Wert im Bereich von 4 bis 10 $\mu$m.
5. Die Schlagzähigkeit soll 5 bis 25. N.m betragen.
6. Die Reißfestigkeit soll 5 bis 15 % oberhalb der zugehörigen Streckgrenze liegen.

Vergleiche Methoden zur Bestimmung der Parameter 1 bis 6 in (1) bis (4), soweit in diesen Unterlagen nicht ausführlich dargestellt.

Herstellung der erfindungsgemäßen Formmasse

Die Herstellung der erfindungsgemäßen Formmassen erfolgt durch Polymerisation des Monomerengemisches $a_{11}$ und $a_{12}$ in Gegenwart des Kautschuks, wobei der Kautschuk zunächst in der Monomerenmischung gelöst und diese Ausgangslösung dann unter Rühren polymerisiert wird. Bei einer solchen Polymerisation spricht man von einer Masse-Polymerisation.

Dem Reaktionsansatz kann bis zu 50 Gew.-%, bezogen auf die Monomerenmischung, eines indifferenten Lösungsmittels zugegeben werden. Geeignet sind hierfür beispielsweise aromatische Kohlenwasserstoffe wie Toluol, Ethylbenzol oder die Xylole. Bei einer solchen Polymerisation spricht man von einer Lösungspolymerisation.

Die dritte Ausführungsform ist die Polymerisation in Masse und dann in wäßriger Suspension. Hierzu wird die Lösung des Kautschuks in den Monomeren bis zu einem Umsatz von ca. 35 % in Masse unter Rühren vorpolymerisiert, dann in Wasser suspendiert und anschließend auspolymerisiert.

Bei allen drei Ausführungsformen wird in der Regel in einem Temperaturbereich von 50 bis 250°C, vorzugsweise 80 bis 200°C, polymerisiert. Der Polymerisationsstart kann entweder thermisch oder durch Zugabe öllöslicher, dem Fachmann bekannter, in Radikale zerfallender Initiatoren, wie Peroxide oder Azo-Verbindungen erfolgen. Die Unterschiede in beiden Verfahrensvarianten sind dem Fachmann geläufig.

Die Polymerisation kann kontinuierlich oder diskontinuierlich durchgeführt werden.

Das kontinuierliche Verfahren ist in DE-AS 17 70 392, das diskontinuierliche in DE-AS 26 13 352 hinreichend beschrieben, so daß der Verweis auf diese Druckschriften genügen mag.

Wenn diese Masse ganz durchpolymerisiert ist, dann ist eine Hartmatrix aus dem Copolymerisat mit einer darin eingelagerten Weichphase entstanden.

Unter Weichphase (Gelgehalt) soll hier der bei Raumtemperatur (23°C) in Toluol unlösliche Anteil des schlagfest modifizierten Polymerisats abzüglich etwaiger Pigmente verstanden werden. Diese Weichphase ist heterogen aufgebaut und wird während des Herstellungsprozesses gebildet. Ihre Menge und ihr Zerteilungsgrad wird durch die Verfahrensbedingungen beeinflußt.

Die zu polymerisierende Kautschuklösung trennt sich kurz nach Beginn der Polymerisation bekanntlich

4

in zwei Phasen, von denen zunächst die Lösung des Kautschuks in der Monomerenmischung die Kohärente bildet, während die zweite, eine Lösung des Copolymerisats in den Monomeren, in der ersten in Tröpfchen suspendiert bleibt. Bei steigendem Umsatz vermehrt sich die Menge der zweiten Phase auf Kosten der ersten und unter Monomerenverbrauch; dabei tritt dann ein Wechsel der Phasenkohärenz auf, bei dem sich Tropfen der Kautschuklösung in der Copolymerisatlösung ausbilden, die ihrerseits kleinere Tropfen der jetzt äußeren Phase fest eingeschlossen enthalten.

Neben diesem Vorgang läuft eine Pfropfreaktion ab, bei der chemische Verknüpfungen zwischen den Kautschukmolekülen und dem Copolymerisat unter Bildung von Pfropf-Copolymeren aus beiden Bestandteilen gebildet werden. Dieser Vorgang ist bekannt und z.B. bei Fischer, die Angew. Makromol. Chem. 33, S. 35-75 (1973), ausführlich beschrieben.

Die in den Beispielen und Vergleichsversuchen beschriebenen Parameter wurden wie folgt bestimmt:

1. Die Viskositätszahl, VZ, der Hartmatrix in ml/g wird analog DIN 53 724 bestimmt.

2. Als Maß für die Schlagzähigkeit wird die 50 %ige Schädigungsarbeit, $W_{50}$, [N.m] aus einem Fallbolzenversuch gemäß DIN 53 443 bei T = 23°C an bei T = 280°C spritzgegossenen Testkästchen angegeben.

3. Von den Produkten der Beispiele und von Vergleichsproben wurden in bekannter Weise elektronenmikroskopische Dünnschichtaufnahmen angefertigt, die zur Bestimmung der Teilchengröße und Verteilung der Weichphase dienten.

Die Bestimmung geschah mit Hilfe der Bildanalyse nach dem Verfahren, wie es von W. Alex in Zeitzchrift für Aufbereitung und Verfahrenstechnik 13, (1972) im Kap. 3.11 beschrieben ist. Die Zahl der ausgewerteten Teilchen lag zwischen 1500 und 6500.

Bei der Angabe der mittleren Teilchengröße handelt es sich in allen Fällen um das Volumenmittel der Teilchengröße. Die Bildanalyse liefert die integrale Volumenvertilung des Teilchendurchmessers einer Probe. Hieraus läßt sich entnehmen, wieviel Volumenprozent der Teilchen einen Durchmesser gleich oder kleiner einer bestimmten Größe haben. Der mittlere Teilchendurchmesser, der auch als $d_{50}$-Wert der integralen Volumenverteilung bezeichnet wird, ist dabei als der Teilchendurchmesser definiert, bei dem 50 Vol.-% der Teilchen einen größeren Durchmesser aufweisen als dem $d_{50}$-Wert entspricht. Zur Charakterisierung der Teilchengrößenverteilung der Kautschukteilchen werden nebem dem $d_{50}$-Wert (mittlerer Teilchendurchmesser) die sich ebenfalls aus der integralen Volumenverteilung ergebenden $d_{10}$-bzw. $d_{90}$-Werte herangezogen. Der $d_{10}$-bzw. $d_{90}$-Wert der integralen Volumenverteilung ist dabei entsprechend dem $d_{50}$-Wert definiert mit dem Unterschied, daß sie auf 10 bzw. 90 Vol.-% der Teilchen bezogen sind.

4. Die Beständigkeit gegen Spannungsrißkorrosion wurde wie folgt gemessen:

a) Beständigkeit gegen Fett: Sie wurde geprüft nach DIN 53 449 mit einem Testmedium aus Olivenöl/Ölsäure 1 : 1 bei 23°C. Gepreßte Normkleinstäbe (200°C) wurden 23 h in diesem Testmedium gelagert. Anschließend wird in einem Zugversuch die Reißdehnung (%) als Funktion des Kugelübermaßes bestimmt.

Zum Vergleich wurden Normkleinstäbe, die 24 h an Luft gelassen wurden, geprüft. Als Maß für die Spannungsrißbeständigkeit werden die relative und die absolute Restreißdehnung angegeben. Die relative Restreißdehnung wird definiert als

$$\text{relative Restreißdehnung} = \frac{\text{Reißdehnung (Olivenöl/Ölsäure)}}{\text{Reißdehnung (Luft)}} \cdot 100 \ [\%]$$

wobei die angegebenen Werte jeweils Mittelwerte über Messungen bei drei verschiedenen Kugelübermaßen von ca. 10, 150 und 200 μm darstellen.

Es werden diejenigen Produkte als spannungsrißbeständig im Sinne der vorliegenden Erfindung eingestuft, die eine relative Restreißdehnung von mehr als 30 % und eine absolute Restreißdehnung von mehr als 10 % besitzen.

b) Beständigkeit gegen niedrigsiedende Halogenkohlenwasserstoffe: Sie wurde nach einer entsprechenden einstündigen Lagerung von gepreßten Normkleinstäben in einer Frigen-11-Atmosphäre wie unter a) beschrieben, getestet. Hierbei werden die Produkte als spannungsrißbeständig im Sinne der vorliegenden Erfindung eingestuft, die eine relative Restreißdehnung von mehr als 75 % und eine absolute Restreißdehnung von mehr als 10 % besitzen.

5. Die Haftung an Polyurethanschäumen wurde in folgendem Test ermittelt. Gepreßte Rundscheiben von 6 cm Durchmesser wurden auf eine Unterlage gebracht und mit einer kommerziell erhältlichen aufschäumenden Polyurethan-Mischung (Sprühdose) übergossen. Nach 24 h wurden die Preßplättchen manuell vom Schaum abgezogen. Die Einstufung "gute Schaumhaftung" erfolgt, wenn dabei der Schaum reißt und die Einstufung "schlechte Schaumhaftung" bei einer Trennung an der Grenzfläche von schlagfestem Polystyrol/Polyurethanschaum.

6. Die Fließfähigkeit wurde in Form des Meltindex bei 200°C und einer Belastung von 5 kp in [g/10 Min] (DIN 53 735) gemessen.

Zur Durchführung der Beispiele und für Vergleichszwecke wurde als Kautschuk (elastomere Pfropfgrundlage) ein Handelsprodukt, ®Buna HX 529 C der Firma Bayer AG, verwendet. Es handelt sich nach Angaben des Herstellers um ein Homopolybutadien mit einem mittleren Molekulargewicht von 295 000 (Gewichtsmittel) und einem Gehalt von 37 % an cis-Struktureinheiten.

Die nachfolgenden Beispiele und Vergleichsversuche sollen die Erfindung näher erläutern. Die angegebenen Teile und Prozente beziehen sich dabei, sofern nicht anders erwähnt, auf das Gewicht.

Beispiele 1 bis 9 und Vergleichsversuche I bis IV

Beispiel 1

In einem mit einem Ankerrührer ausgestatteten Kessel mit einem Fassungsvermögen von 5 Litern werden 1736 g Styrol, 152 g Polybutadien (Buna HX 529 C), 9,5 g Acrylsäure, 1,9 kg eines sterisch gehinderten Phenols als Stabilisator (®Irganox 1076 von Ciba Geigy) und 0,95 g t-Dodecylmercaptan gegeben. Nachdem sich das Polybutadien vollständig gelöst, hat wird isotherm bei 123°C und 75 Rührerumdrehungen/Minute bis zu einem Umsatz von 35 %, bezogen auf die Monomeren, polymerisiert. Danach wird in wäßriger Suspension weiterpolymerisiert. Hierzu werden 1,9 g Dicumylperoxid sowie 1800 ml $H_2O$, 18 g eines Suspensionshilfsmittels auf Basis Ethylenoxid (®Luviskol K90 der BASF Aktiengesellschaft( und 1,8 g Natriumpyrophosphat zugegeben. In Suspension wird bei 300 Rührerumdrehungen pro Minute 6 h isotherm bei 130°C und 6 h isotherm bei 140°C bis zu einem Umsatz vonmehr als 99 %, bezogen auf die Monomeren, polymerisiert.

Der (Acryl)säuregehalt am Endprodukt wurde durch Titration eine Lösung desselben in Toluol/Methanol (9 : 1) mit einer Maßlösung von NaOH in Methanol gegen Phenolphthalein bestimmt. Es wurde ein Wert von 0,48 Gew.-%, bezogen auf die Formmasse aus Hartmatrix und Weichphase, gefunden. Die VZ der Hartmatrix wurde zu 71,4 bestimmt. Der $d_{50}$-Wert betrug 5,3 $\mu$m, der $d_{90}$-$d_{10}$-Wert 6,5 mm.

Beispiele 2 bis 9 und Vergleichsversuche I und II

Die Beispiele 2 bis 9 und die Vergleichsversuche I (ohne Acrylsäure) und II wurden in der vorstehend beschriebenen Versuchsanordnung durchgeführt, mit der Maßgabe, daß die Mengen an Carbonylverbindung variiert wurde, so daß die in Tabelle 1 genannten Gehalte an Säure im Endprodukt, bezogen auf A + B, erzielt wurden. In die Tabelle 1 sind die Viskositätszahlen der Matrix, der Gehalt an Weichphase (Gelgehalt), der mittlere Teilchendurchmesser ($d_{50}$) und die Teilchenverteilung ($d_{90}$-$d_{10}$) aufgenommen worden.

Tabelle 1

| Beispiel | Carbonylverbindung Art | Menge % | Weichphase % | VZ | $d_{50}$ | $d_{90}-d_{10}$ |
|---|---|---|---|---|---|---|
| 2 | Methacrylsäure | 0,5 | 31,4 | 70,3 | 5,4 | 6,5 |
| 3 | Fumarsäure | 0,5 | 33,6 | 71,2 | 5,3 | 7,3 |
| 4 | Itaconsäure | 0,5 | 32,8 | 70,8 | 5,8 | 7,6 |
| 5 | Acrylsäure | 0,1 | 30,0 | 72,1 | 5,9 | 7,4 |
| 6 | Acrylsäure | 0,25 | 31,6 | 71,4 | 5,7 | 6,8 |
| 7 | Acrylsäure | 0,5 | 30,9 | 71,6 | 6,1 | 7,3 |
| 8 | Acrylsäure | 1,0 | 32,1 | 70,3 | 6,2 | 7,4 |
| 9 | Acrylsäure | 1,95 | 33,5 | 69,8 | 5,8 | 6,9 |
| Vergleichs-versuch | | | | | | |
| I | Acrylsäure | - | 33,6 | 71,5 | 5,7 | 7,1 |
| II | Acrylsäure | 0,05 | 33,2 | 70,6 | 5,5 | 6,9 |
| III | Methylmethacrylat | 10* | 42,4 | 66,8 | 6,3 | 7,8 |
| IV | Methylmethacrylat | 2,0** | 41,8 | 72,6 | 6,4 | 8,1 |

\* gemäß Bsp. 5 EP 29 174      \*\* gemäß unterem Grenzwert der EP 29 174

Beim Vergleich der Eigenschaften in Tabelle 2 erkennt man, daß die erfindungsgemäße Formmasse gemäß Beispiel 1 im Bezug auf die Spannungsrißbeständigkeit ansprechend ist. Ferner ist ersichtlich, daß das Polymerisat aus Beispiel 1 gut an PU-Schaum haftet, und daß sich seine Fließfähigkeit nicht verschlechtert hat.

Im Falle Produkte der Beispiele 2, 3 und 4 ergibt sich eine Kombination aus Spannungsrißbestandigkeit, guter Schaumhaftung und unverändert guter Fließfähigkeit.

Alle Produkte der Beispiele 5 bis 9 besitzen eine Kombination aus Spannungsrißbeständigkeit und guter Schaumhaftung.

Dagegen besitzen die Proben der Vergleichsversuche I und II keine Schaumhaftung, wofür ein fehlender (Versuch I) bzw. ein zu geringer (Versuch II) Gehalt an Monomeren $a_{12}$ verantwortlich ist.

Die dem Stand der Technik entsprechende Probe von Vergleichsversuch III zeigt neben schlechter Haftung eine geringe Fließfähigkeit. Dasselbe gilt für die Probe von Vergleichsversuch IV.

Tabelle 2

| Beispiel | Spannungsrißkorrosion (Restreißdehnung) | | | | PU-Schaum- | MFI |
| | Ölsäure/Olivenöl | | Frigen | | haftung | [g/10min] |
| | absolut % | relativ | absolut % | relativ | | |
| --- | --- | --- | --- | --- | --- | --- |
| 1 | 19 | 40 | 43 | 93 | gut | 4,7 |
| 2 | 19 | 39 | 39 | 89 | gut | 4,3 |
| 3 | 22 | 43 | 40 | 92 | gut | 4,5 |
| 4 | 21 | 41 | 39 | 90 | gut | 4,9 |
| 5 | 19 | 40 | 37 | 87 | gut | 4,9 |
| 6 | 21 | 41 | 39 | 92 | gut | 4,9 |
| 7 | 20 | 41 | 39 | 91 | gut | 4,7 |
| 8 | 22 | 43 | 42 | 94 | gut | 3,8 |
| 9 | 23 | 42 | 40 | 90 | gut | 4,5 |
| Vergleichs-versuche | | | | | | |
| I | 20 | 38 | 42 | 90 | schlecht | 4,6 |
| II | | | | | schlecht | |
| III | 18 | 41 | 35 | 80 | schlecht | 1,7 |
| IV | 18 | 42 | 38 | 91 | schlecht | 2,3 |

**Ansprüche**

1. Schlagfeste thermoplastiche Formmasse, enthaltend, jeweils bezogen auf A + B,
A 80 bis 55 Gew.-% einer Hartmatrix aus einem Copolymeren
von
$a_{11}$ mindestens einem vinylaromatischen Monomeren
und
$a_{12}$ mindestens einem Comonomeren
und
B 45 bis 20 Gew.-% einer gleichmäßig in der Hartmatrix verteilten Weichphase, die einen mittleren Teilchendurchmesser, $d_{50}$ (Volumenmittel), von 3, 5 bis 9 µm aufweist und erhältlich ist durch Polymerisation der Mischung der Monomeren $a_{11}$ und $a_{12}$ in Gegenwart eines Elastomeren (Kautschuk) unter anschließender Gewinnung des Wertproduktes,
dadurch gekennzeichnet, daß das Comonomere $a_{12}$ ausgewählt wird aus der Gruppe der $\alpha,\beta$-ungesättigten Mono-oder Dicarbonsäuren und daß dieses ferner, bezogen auf A + B, in Mengen von 0,1 bis 1,95 Gew.-% angewendet wird.
2. Schlagfeste thermoplastische Formmasse gemäß Anspruch 1, bestehend aus den Komponenten A und B.
3. Schlagfeste thermoplastische Formmasse nach Anspruch 1, enthaltend außerdem übliche Zusatzstoffe C in üblichen Mengen.
4. Schlagfeste thermoplastische Formmasse, enthaltend, jeweils bezogen auf A + B,
A 75 bis 55 Gew.-% einer Hartmatrix aus einem Copolymeren
von
$a_{11}$ mindestens einem vinylaromatischen Monomeren
und
$a_{12}$ mindestens einem Comonomeren
B 45 bis 25 Gew.-% einer gleichmäßig in der Hartmatrix verteilten Weichphase, die einen mittleren Teilchendurchmesser, $d_{50}$ (Volumenmittel), von 4,0 bis 6,0 µm aufweist und erhältlich ist durch Polymerisa-

8

tion der Mischung der Monomeren $a_{11}$ und $a_{12}$ in Gegenwart von 4 bis 12 Gew.-%, bezogen auf die Mischung aus $a_{11}$ und $a_{12}$, eines Elastomeren (Kautschuk) unter anschließender Gewinnung des Wertprodukts, dadurch gekennzeichnet, daß das Comonomere $a_{12}$ ausgewählt wird aus der Gruppe der Acrylsäure, der Methacrylsäure, der Fumarsäure, der Itaconsäure oder deren Mischungen und daß dieses ferner, bezogen auf A + B, in Mengen von 0,1 bis 1,95 Gew.-% angewendet wird.

5. Schlagfeste thermoplastische Formmasse, enthaltend, jeweils bezogen auf A + B,

A 75 bis 55 Gew.-% einer Hartmatrix aus einem Copolymeren von $a_{11}$ Styrol

und

$a_{12}$ mindestens einem Comonomeren

und

B 45 bis 25 Gew.-% einer gleichmäßig in der Hartmatrix verteilten Weichphase, die einen mittleren Teilchendurchmesser, $d_{50}$ (Volumenmittel), von 4,0 bis 6 $\mu$m aufweist und erhältlich ist durch Polymerisation der Mischung der Monomeren $a_{11}$ und $a_{12}$ in Gegenwart von 6 bis 12 Gew.-%, bezogen auf die Mischung aus $a_{11}$ und $a_{12}$, von Polybutadien als Kautschuk unter anschließender Gewinnung des Wertprodukts, dadurch gekennzeichnet, daß das Comonomere $a_{12}$ (Meth)-Acrylsäure ist und, bezogen auf A + B, in Mengen von 0,1 bis 1,95 Gew.-% angewendet wird.

6. Verwendung der Formmasse gemäß Anspruch 1 zur Herstellung von Formteilen.

7. Formteile aus Formmassen gemäß Anspruch 1.